# FASCICULE DE BREVET EUROPEEN

(11) **EP 0 508 882 B1**
(45) Date de publication et mention de la délivrance du brevet: **21.02.1996**
(21) Numéro de dépôt: 92400965.7
(22) Date de dépôt: 07.04.1992
(51) Int. Cl.: H04M 1/00

(54) **Poste téléphonique comportant un circuit de sonnerie et un circuit de conversation reliés à des bornes de connexion communes**
Telefonapparat mit gemeinsamen Anschlussklemmen für Weckschaltung und Sprechschaltung
Telephone set having ring circuit and speech circuit connected to common connection terminals

(30) Priorité: 10.04.1991 FR 9104352
(43) Date de publication de la demande: 14.10.1992
(73) Titulaire: MATRA COMMUNICATION, F-29101 Quimper (FR)
(72) Inventeur: Marti, Franck, F-29170 Fouesnant (FR); Robbe, Michel, F-78700 Conflans Sainte-Honorine (FR)
(74) Mandataire: Fruchard, Guy

(56) Documents cités:
- FR-A- 2 520 569
- US-A- 4 756 021
- PATENT ABSTRACTS OF JAPAN vol. 11, no. 312 (E-548)(2759) 12 Octobre 1987 & JP-A-62 105 556 (NEC CORP.) 16 Mai 1987

## Description

La présente invention concerne un poste téléphonique comportant un circuit de sonnerie et un circuit de conversation ayant des bornes de connexion communes.

On connaît des postes téléphoniques comportant un circuit de sonnerie et un circuit de conversation reliés à un réseau téléphonique par des bornes de connexion communes par l'intermédiaire d'organes de séparation de signaux eux-mêmes reliés à une ligne d'entrée du circuit de sonnerie, une ligne d'entrée du circuit de conversation et des lignes de retour présentant au moins un point commun. Un tel poste est divulgué par exemple dans JP-A-62 105 556 (Patent Abstracts of Japan: vol. 11, no. 312).

Afin d'assurer une interruption de la sonnerie et une mise en oeuvre du circuit de conversation lors d'une prise de ligne par un utilisateur, le poste téléphonique comprend alors un interrupteur mécanique double dont les contacts sont disposés pour assurer simultanément l'ouverture du circuit de sonnerie et la fermeture du circuit de conversation lors de la prise de ligne. Un tel interrupteur doit être parfaitement réglé pour assurer simultanément ces deux fonctions sans pour autant risquer d'interrompre la communication pour laquelle l'utilisateur effectue la prise de ligne. En outre, il est important que la fermeture du circuit de conversation ne soit pas effectuée en avance de l'ouverture du circuit de sonnerie car le circuit de sonnerie fonctionne généralement à une tension très élevée par rapport au circuit de conversation et les impulsions du circuit de sonnerie qui reviennent par le point commun des lignes de retour risqueraient de détériorer certaines caractéristiques normatives si le circuit de sonnerie restait fermé en même temps que le circuit de conversation.

Pour assurer simultanément la fonction d'ouverture du circuit de sonnerie et de fermeture du circuit de conversation il est donc nécessaire de prévoir des interrupteurs doubles relativement onéreux.

Un but de l'invention est donc de proposer un poste téléphonique comportant un circuit de sonnerie et un circuit de conversation reliés à des bornes de connexion communes mais ne comportant pas d'interrupteur mécanique double.

En vue de la réalisation de ce but, on propose selon l'invention un poste téléphonique comportant un circuit de sonnerie et un circuit de conversation reliés à des bornes de connexion communes par l'intermédiaire d'organes de séparation de signaux respectivement reliés à une ligne d'entrée du circuit de sonnerie, une ligne d'entrée du circuit de conversation et des lignes de retour présentant au moins un point commun, un interrupteur commandé mécaniquement disposé dans le circuit de conversation, au moins un interrupteur électronique disposé dans le circuit de sonnerie et relié par une ligne de liaison au circuit de conversation par l'intermédiaire d'un organe de commande agissant en fonction d'un état de l'interrupteur commandé mécaniquement et d'une différence de potentiel entre le point commun d'une part et la ligne d'entrée du circuit de sonnerie ou la ligne d'entrée du circuit de conversation d'autre part, la commande étant déterminée par celle de ces deux lignes d'entrée qui présente un potentiel positif par rapport au point commun.

Ainsi, en agissant sur un interrupteur mécanique simple on déclenche simultanément la fermeture du circuit de conversation et l'ouverture du circuit de sonnerie quelle que soit la polarité relative de la ligne d'entrée du circuit de conversation par rapport au point commun des lignes de retour.

Selon une version avantageuse de l'invention, l'organe de commande comporte une cellule OU reliée à des lignes d'entrée parallèles dans lesquelles sont disposées des diodes montées selon des positions inverses l'une de l'autre et chacune associée à un générateur de courant relié au circuit de conversation. De préférence, les générateurs de courant comprennent des transistors commandés par l'interrupteur commandé mécaniquement. Ainsi, on minimise l'énergie utilisée pour la commande de l'interrupteur électronique.

Selon un autre aspect avantageux de l'invention, l'interrupteur commandé mécaniquement comporte un interrupteur électronique commandé par une ligne comportant un interrupteur mécanique de faible puissance, de préférence relié à un générateur de courant.

Selon un mode de réalisation préféré de l'invention, le poste téléphonique comporte deux interrupteurs électroniques reliés à une ligne de liaison commune et disposés de part et d'autre du circuit de sonnerie. Ainsi, on évite un bouclage dans le circuit de sonnerie en particulier lorsque l'on utilise plusieurs sonneries montées en parallèle.

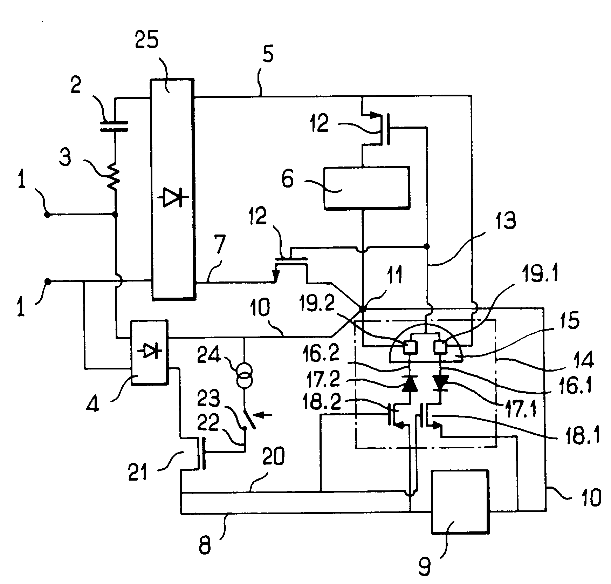

D'autres caractéristiques et avantages de l'invention apparaîtront à la lecture de la description qui suit d'un mode de réalisation particulier non limitatif de l'invention en liaison avec la figure unique ci-jointe qui est un diagramme schématique du poste téléphonique selon l'invention.

En référence à la figure, le poste téléphonique selon l'invention comporte deux bornes de connexion 1 destinées à être reliées à un réseau téléphonique et associées à des organes de séparation de signaux comprenant un condensateur 2 relié à une résistance d'adaptation d'impédance 3 pour isoler la composante alternative des signaux téléphoniques, et un pont de diodes 4 qui n'est pas représenté en détail, pour isoler la composante continue des signaux téléphoniques. Le condensateur 2 et l'autre ligne d'entrée 1 du poste téléphonique sont reliés par l'intermédiaire d'un pont de diodes 25 à une ligne d'entrée 5 et une ligne de retour 7 d'un circuit de sonnerie 6.

De son côté, le pont de diodes 4 est relié à une ligne d'entrée 8 d'un circuit de conversation 9 relié à une ligne de retour 10 en passant par un point commun 11 avec la ligne de retour 7 du circuit de sonnerie 6. Bien que le point commun 11 soit représenté sur la figure sous forme d'un point unique, il s'agira en pratique d'un segment de ligne réunisles lignes de retour 7 et 10.

Deux transistors 12 formant des interrupteurs électroniques sont disposés de part et d'autre du circuit de sonnerie 6, l'un sur la ligne d'entrée 5 et l'autre sur la ligne de retour 7 en aval du point commun 11 avec la ligne de retour du circuit de conversation. Les transistors 12 sont reliés par une ligne de liaison 13 au circuit de conversation par l'intermédiaire d'un organe de commande généralement désigné en 14. Dans le mode de réalisation préféré illustré, l'organe de commande 14 comporte une cellule OU 15 dont la sortie est reliée à la ligne de liaison 13 et dont les entrées sont reliées à des lignes d'entrée parallèles désignées d'une façon générale par la référence 16 et identifiées de façon plus précise par les références numériques 16.1 et 16.2. Les lignes d'entrée comprennent chacune une diode, respectivement 17.1 et 17.2, associée à un générateur de courant, respectivement 18.1 et 18.2 formée par un transistor relié au circuit de conversation. Les diodes 16.1 et 16.2 sont montées selon une position inverse l'une de l'autre. La ligne d'entrée 16.1 de la cellule logique OU a une extrémité reliée à la ligne de retour du circuit de conversation, et une extrémité opposée reliée à un composant logique 19.1 de la cellule OU 15 qui est lui-même relié à la ligne d'entrée 5 du circuit de sonnerie de sorte que le composant logique 19.1 est activé lorsqu'il existe une différence de potentiel positive entre la ligne d'entrée 5 du circuit de sonnerie et la ligne de retour 10 du circuit de conversation qui est au potentiel du point commun 11 des lignes de retour. L'autre ligne d'entrée 16.2 de la cellule OU 15 a une extrémité reliée à la ligne d'entrée 8 du circuit de conversation et l'extrémité opposée est reliée à un composant logique 19.2 lui-même relié au point commun 11 des lignes de retour de sorte que le composant logique 19.2 est activé lorsqu'il existe une différence de potentiel positive entre la ligne d'entrée 8 du circuit de conversation et le point commun 11 des lignes de retour.

Par ailleurs, les générateurs de courant formés par les transistors 18.1 et 18.2 sont commandés par une ligne 20 reliée à la ligne d'entrée 8 du circuit de conversation 9 en aval d'un transistor 21 faisant fonction d'interrupteur électronique et commandé par une ligne 22 sur laquelle est disposé un interrupteur mécanique de faible puissance 23 associé à un générateur de courant 24. L'interrupteur mécanique 23 est un interrupteur simple qui est commandé directement par l'utilisateur, par exemple par la position du combiné dans le cas d'une prise de ligne directe, ou par une pression sur un bouton pressoir dans le cas d'une prise de ligne sans décrocher, un interrupteur mécanique pour une prise de ligne directe et un interrupteur mécanique pour une prise de ligne sans décrocher pouvant bien entendu être disposés en parallèle sur la ligne d'entrée du circuit de conversation. Par référence au fait que deux interrupteurs montés en parallèles assurent en fait une seule fonction de fermeture du circuit, on considère donc que le circuit de conversation comporte un seul interrupteur commandé mécaniquement au sens de l'invention.

On remarque que les lignes de retour 7 et 10 sont à un même potentiel en raison du point commun 11. Ce potentiel est flottant et varie en particulier de façon alternative pendant la phase de sonnerie. Pendant cette phase, l'interrupteur 23 est ouvert, le transistor 21 est donc bloqué, ce qui a pour effet de bloquer les transistors 18.1 et 18.2, le transistor 18.2 n'étant d'ailleurs pas alimenté. Les transistors 12 du circuit de sonnerie sont donc passants et le circuit de sonnerie fonctionne dès que des signaux d'appel apparaissent aux bornes de connexion 1 avec le réseau téléphonique. Lorsque l'utilisateur effectue une prise de ligne en fermant l'interrupteur mécanique 23, le transistor 21 est débloqué, ce qui assure simultanément l'alimentation du circuit de conversation 9, l'alimentation du transistor 18.2 et le déblocage des transistors 18.1 et 18.2. Quel que soit le potentiel du point commun 11 des lignes de retour au moment de la fermeture de l'interrupteur mécanique 23, l'une des lignes d'entrée 16 de la cellule OU 15 se trouve convenablement polarisée pour transmettre sur la ligne de liaison 13 un signal qui provoque le blocage des transistors 12. On remarquera à ce propos que le générateur de courant 24 protège l'interrupteur mécanique 23 contre une surintensité et les transistors 18.1 et 18.2 agissant comme générateurs de courant limitent ce courant de sorte que les composants du circuit de conversation 9 ne sont pas affectés par le courant de commande des interrupteurs électroniques 12.

Bien entendu l'invention n'est pas limitée au mode de réalisation décrit et on peut y apporter des variantes de réalisation sans sortir du cadre de l'invention. En particulier, dans le cas où il n'existe pas de risque de bouclage dans le circuit de sonnerie, on peut prévoir un seul interrupteur électronique disposé de préférence sur la ligne de retour 7 du circuit de sonnerie. Bien que les interrupteurs électroniques illustrés soient des transistors, on peut également prévoir d'autres composants tels que des thyristors, des photocoupleurs ou analogues.

On peut également remplacer l'interrupteur commandé mécaniquement, comprenant le transistor 21 et l'interrupteur mécanique 23, par un interrupteur mécanique disposé directement dans la ligne d'entrée 8 du circuit de conversation. Cet interrupteur devra alors supporter la totalité du courant d'alimentation du circuit de conversation et devra donc être de plus forte puissance que l'interrupteur 23 prévu dans le mode de réalisation préféré de l'invention.

## Revendications

1. Poste téléphonique comportant un circuit de sonnerie (6) et un circuit de conversation (9) reliés à des bornes de connexion communes (1) par l'intermédiaire d'organes de séparation de signaux (2, 4) respectivement reliés à une ligne d'entrée (5) du circuit de sonnerie, une ligne d'entrée (8) du circuit de conversation et des lignes de retour présentant au moins un point commun (11), et un interrupteur commandé mécaniquement (21, 23) disposé dans le circuit de conversation, caractérisé en ce qu'il comporte au moins un interrupteur électronique (12) disposé dans le circuit de sonnerie et relié par une ligne de liaison (13) au circuit de conversation par l'intermédiaire d'un organe de commande (14) agissant en fonction d'un état de l'interrupteur commandé mécaniquement et d'une différence de potentiel entre le point commun d'une part et la ligne d'entrée du circuit de sonnerie ou la ligne d'entrée du circuit de conversation d'autre part, la commande étant déterminée par celle de ces deux lignes d'entrée qui présente un potentiel positif par rapport au point commun.

2. Poste téléphonique selon la revendication 1 caractérisé en ce que l'organe de commande (14) comporte une cellule OU (15) reliée à des lignes d'entrée parallèles (16) dans lesquelles sont disposées des diodes (17) montées selon des positions inverses l'une de l'autre et chacune associée à un générateur du courant (18) relié au circuit de conversation.

3. Poste téléphonique selon la revendication 2 caractérisé en ce que les générateurs de courant comprennent des transistors (18), commandés par l'interrupteur commandé mécaniquement (21,23).

4. Poste téléphonique selon la revendication 1 à 3 caractérisé en ce que l'interrupteur commandé mécaniquement comprend un interrupteur électronique (21) commandé par un interrupteur mécanique (23) de faible puissance.

5. Poste téléphonique selon la revendication 4 caractérisé en ce que l'interrupteur mécanique (23) est relié à un générateur de courant (24).

6. Poste téléphonique selon l'une des revendications 1 à 5 caractérisé en ce qu'il comporte deux interrupteurs électroniques (12) reliés à une ligne de liaison commune (13) et disposés de part et d'autre du circuit de sonnerie (6).

## Claims

1. A telephone set comprising a ring circuit (6) and a speech circuit (9) which are connected to common connection terminals by way of signal separation members (2, 4) which are respectively connected to an input line (5) of the ring circuit, an input line (8) of the speech circuit and return lines having at least one common point (11), and a mechanically controlled switch (21, 23) disposed in the speech circuit, characterised in that it comprises at least one electronic switch (12) disposed in the ring circuit and connected by a connecting line (13) to the speech circuit by way of a control member (14) which acts in dependence on a state of the mechanically controlled switch and a potential difference between the common point on the one hand and the input line of the ring circuit or the input line of the speech circuit on the other hand, the control action being determined by that one of those two input lines which is at a positive potential relative to the common point.

2. A telephone set according to claim 1 characterised in that the control member (14) comprises an OR-gate (15) connected to parallel input lines (16) in which are disposed diodes (17) which are arranged in reverse positions relative to each other and which are each associated with a current generator (18) connected to the speech circuit.

3. A telephone set according to claim 2 characterised in that the current generators comprise transistors (18) which are controlled by the mechanically controlled switch (21, 23).

4. A telephone set according to claims 1 to 3 characterised in that the mechanically controlled switch comprises an electronic switch (21) controlled by a mechanical low-power switch (23).

5. A telephone set according to claim 4 characterised in that the mechanical switch (23) is connected to a current generator (24).

6. A telephone set according to one of claims 1 to 5 characterised in that it comprises two electronic switches (12) which are connected to a common connecting line (13) and disposed on respective sides of the ring circuit (6).

## Patentansprüche

1. Telefonapparat mit einer Weckschaltung (6) und einer Sprechschaltung (9), die mit gemeinsamen Anschlußklemmen (1) über Signaltrennorgane (2, 4) verbunden sind, die mit einer Eingangsleitung (5) der Weckschaltung, einer Eingangsleitung (8) der Sprechschaltung bzw. Rückleitungen verbunden sind, die mindestens einen gemeinsamen Punkt (11) haben, und mit einem mechanisch gesteuerten Schalter (21, 23), der in der Sprechschaltung angeordnet ist, dadurch **gekennzeichnet**, daß er mindestens einen elektronischen Schalter (12) hat, der in der Weckschaltung angeordnet ist und mit der Sprechschaltung durch eine Verbindungsleitung (13) über ein Steuerorgan (14) verbunden ist, das in Abhängigkeit eines Zustandes des mechanisch gesteuerten Schalters und einer Potentialdifferenz zwischen dem gemeinsamen Punkt einerseits und der Eingangsleitung der Wechselschaltung oder der Eingangsleitung der Sprechschaltung andererseits arbeitet, wobei die Steuerung durch diejenige der beiden Eingangsleitungen bestimmt wird, die ein gegenüber dem gemeinsamen Punkt positives Potential hat.

2. Telefonapparat nach Anspruch 1, dadurch **gekennzeichnet**, daß das Steuerorgan (14) ein ODER-Glied (15) hat, welches an parallele Eingangsleitungen (16) angeschlossen ist, in denen Dioden (17) angeordnet sind, die invers zueinander geschaltet und jeweils an einen Stromgenerator (18) angeschlossen sind, der mit der Sprechschaltung verbunden ist.

3. Telefonapparat nach Anspruch 2, dadurch **gekennzeichnet**, daß die Stromgeneratoren Transistoren (18) umfassen, die durch den mechanisch gesteuerten Schalter (21, 23) gesteuert werden.

4. Telefonapparat nach dem Anspruch 1 bis 3, **dadurch gekennzeichnet**, daß der mechanisch gesteuerte Schalter einen elektronischen Schalter (21) enthält, der durch einen mechanischen Schalter (23) geringer Leistung gesteuert wird.

5. Telefonapparat nach Anspruch 4, dadurch **gekennzeichnet**, daß der mechanische Schalter (23) an einen Stromgenerator (24) angeschlossen ist.

6. Telefonapparat nach einem der Ansprüche 1 bis 5, dadurch **gekennzeichnet**, daß er zwei elektronische Schalter (12) umfaßt, die an eine gemeinsame Verbindungsleitung (13) angeschlossen und beiderseits der Weckschaltung (6) angeordnet sind.
